(19) **Europäisches Patentamt**
**European Patent Office**
**Office européen des brevets**

(11) **EP 3 650 589 A1**

(12) **EUROPEAN PATENT APPLICATION**
published in accordance with Art. 153(4) EPC

(43) Date of publication:
**13.05.2020 Bulletin 2020/20**

(51) Int Cl.:
**D01F 6/00** (2006.01)     **C08J 5/04** (2006.01)
**C08K 3/01** (2018.01)     **C08L 101/00** (2006.01)
**D01D 5/04** (2006.01)     **D01F 6/44** (2006.01)

(21) Application number: **18852144.7**

(22) Date of filing: **10.05.2018**

(86) International application number:
**PCT/JP2018/018068**

(87) International publication number:
**WO 2019/044045 (07.03.2019 Gazette 2019/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.08.2017 JP 2017163218**

(71) Applicants:
• **Kanto Denka Kogyo Co., Ltd.**
**Chiyoda-ku, Tokyo 100-0005 (JP)**
• **National University Corporation
Kyoto Institute of Technology
Sakyo-ku
Kyoto-shi, Kyoto 606-8585 (JP)**

(72) Inventors:
• **YOSHIYAMA, Kazuhide**
**Shibukawa-shi**
**Gunma 377-0027 (JP)**
• **NAKA, Kensuke**
**Kyoto-shi**
**Kyoto 606-8585 (JP)**
• **MATSUKAWA, Kimihiro**
**Kyoto-shi**
**Kyoto 606-8585 (JP)**

(74) Representative: **Gille Hrabal**
**Brucknerstrasse 20**
**40593 Düsseldorf (DE)**

(54) **THERMALLY CONDUCTIVE PARTICLE-FILLED FIBER**

(57)     The present invention is a thermally conductive particle-filled fiber containing a resin and thermally conductive particles, wherein at least some of the thermally conductive particles are present inside the fiber, an average particle diameter of the thermally conductive particles is 10 to 1000 nm, and an average fiber diameter of the fiber is 50 to 10000 nm.

[Fig. 1]

**EP 3 650 589 A1**

**Description**

Field of the Invention

The present invention relates to a thermally conductive particle-filled fiber and a process for producing the same, and a resin composition and a process for producing the same.

Background of the Invention

Fine fibers using resins, carbons, metal oxides, etc. are fibers having nanoscale fiber diameters and generally referred to as nanofibers. The fine fibers have extremely large surface area and are expected to be applied to various uses (e.g., high-performance filter, battery separator, electromagnetic wave shielding material, artificial leather, cell culture substrate, IC chip, organic EL, solar cell, etc.).

In order to change properties of the fine fibers, such as physical properties and electrical properties, or in order to impart a prescribed function to the fine fibers, it has been proposed to combine a material suitable for the purpose with the fine fibers.

In JP-A 2004-3070, a solid particle-supported fiber which is a fiber composed of a thermoplastic resin and supporting solid particles on its surface, wherein a melting point or a decomposition temperature of the solid particles is higher than a melting point of the thermoplastic resin, an average particle diameter of the solid particles is not more than 1/3 of an average diameter of the fiber, and a prescribed effective surface area ratio is not less than 50% is disclosed.

In JP-A 2016-11474, a nonwoven fabric for oral cleaning in which to a surface of a nonwoven fabric containing a fiber composed of a thermoplastic resin, calcined hydroxyapatite particles are stuck in amounts of 0.1 to 20 g/m$^2$, through heat fusion, and which has a shear rigidity of 8.5 gf/cm·deg is disclosed.

In JP-A 2006-336121, it is disclosed that a zirconia fiber having an average fiber diameter of 50 to 1000 nm and a fiber length of not less than 100 μm is produced through prescribed stages.

In JP-A 2011-529437, a nanofiber containing a metal oxide carrier with pores and metal nanoparticles dispersed in the pores, and having a diameter of not more than 300 nm is disclosed.

In JP-A 2015-86270, a filler-dispersed organic resin composite containing a fibrous alumina filler dispersed in the organic resin and having a prescribed thermal conductivity is disclosed.

In JP-A 2008-75010, a resin composite which is a composite constituted of a resin (A) as a matrix and a fibrous substance, wherein the fibrous substance is constituted of a resin (B) and inorganic particles is disclosed.

In JP-A 2010-526941, a nano-size or micro-size fiber containing nano-size or micro-size detoxification particles is disclosed.

In JP-A 2016-79202, a heat dissipation material composed of a composite material of thermally conductive inorganic particles and a cellulose nanofiber, wherein the cellulose nanofiber has been modified by esterification and/or etherification of its surface is disclosed.

Summary of the Invention

Compounds such as magnesium oxide are known to be excellent in thermal conductivity, heat resistance, etc., and they are used in various resins, as thermally conductive fillers to enhance thermal conductivity of a resin composition.

The present invention provides a thermally conductive particle-filled fiber which has excellent thermal conductivity, is capable of imparting excellent thermal conductivity also to a resin and contains thermally conductive particles.

The present invention relates to a thermally conductive particle-filled fiber having an average fiber diameter of 50 to 10000 nm and containing a resin and thermally conductive particles having an average particle diameter of 10 to 1000 nm.

The present invention includes a thermally conductive particle-filled fiber containing a resin and thermally conductive particles, wherein

at least some of the thermally conductive particles are present inside the fiber,

an average particle diameter of the thermally conductive particles is 10 to 1000 nm, and

an average fiber diameter of the fiber is 50 to 10000 nm.

The present invention also relates to a resin composition containing the thermally conductive particle-filled fiber of the present invention and a resin.

The present invention also relates to a process for producing the thermally conductive particle-filled fiber of the present invention, the process having a step of spinning by an electrospinning method using a polymer solution containing the resin, the thermally conductive particles and a solvent.

The present invention also relates to a process for producing a resin composition, the process having step (I) of producing the thermally conductive particle-filled fiber of the present invention and step (II) of blending the thermally conductive particle-filled fiber obtained in step (I) with a resin, wherein step (I) has a step of spinning by an electrospinning method using a polymer solution containing the resin, the thermally conductive particles and a solvent.

According to the present invention, a thermally conductive particle-filled fiber which has excellent thermal conductivity, is capable of imparting excellent thermal conductivity also to a resin and contains thermally conductive particles is provided.

Brief Description of Drawing

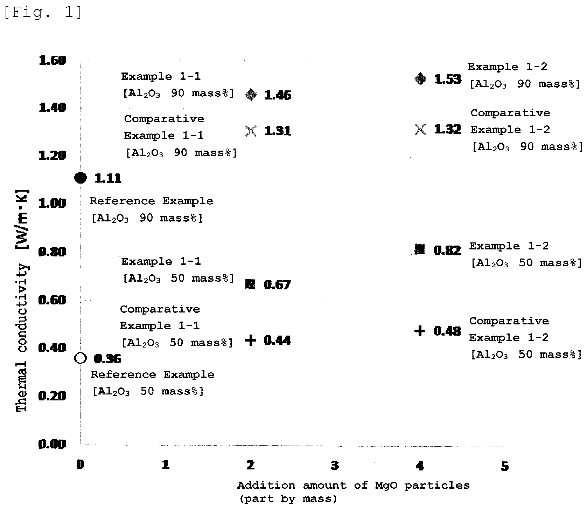

[Figure 1] Figure 1 is a graph showing a relationship between a thermal conductivity of a film obtained in each of the examples and the comparative examples and an amount of magnesium oxide particles added.

Embodiments of the Invention

<Thermally conductive particle-filled fiber and production process for the same>

The present invention relates to a fine fiber having an average fiber diameter of 50 to 10000 nm and containing a resin and thermally conductive particles having an average particle diameter of 10 to 1000 nm. The fiber of the present invention is a resin fiber having an average fiber diameter of 50 to 10000 nm and composed of a resin in which thermally conductive particles having an average particle diameter of 10 to 1000 nm are dispersed.

The thermally conductive particle-filled fiber of the present invention contains a resin and thermally conductive particles.

The resin is one or more resins selected from epoxy resins, acrylic resins, amide-imide resins, phenolic resins, silicone resins, and the like. The resin may be a resin having a curable group such as an epoxy group.

The thermally conductive particle-filled fiber of the present invention preferably contains 25 to 90 mass%, more preferably 25 to 80 mass%, further preferably 50 to 70 mass%, of the resin.

In the present invention, the thermally conductive particle refers to a particle having a thermal conductivity of not less than 1.0 W/m·K.

The average particle diameter of the thermally conductive particles is 10 to 1000 nm, preferably 10 to 500 nm, more preferably 10 to 100 nm. The thermally conductive particles having such an average particle diameter, e.g., magnesium oxide particles, can be obtained by, for example, a gas phase oxidation method.

Here, the average particle diameter of the thermally conductive particles is one measured by dynamic light scattering measurement (DLS). The average particle diameter can be measured by, for example, a dynamic light scattering photometer, and specifically, the average particle diameter can be measured by stirring the thermally conductive particles in a dispersion medium with a magnetic stirrer for about 24 hours to disperse them and subjecting the resulting dispersion to measurement using a dynamic light scattering photometer (e.g., model number: DLS-7000HL manufactured by Otsuka Electronics Co., Ltd.).

As the thermally conductive particles, one or more selected from metal oxide particles, metal nitride particles and carbon particles can be mentioned. As the thermally conductive particles, specifically, one or more selected from magnesium oxide particles, aluminum oxide particles, boron nitride particles, aluminum nitride particles, silicon nitride particles, nanodiamonds, carbon nanotubes and graphene particles can be mentioned. Preferred are metal oxide particles, and more preferred are magnesium oxide particles.

The thermally conductive particle-filled fiber of the present invention preferably contains 20 to 90 mass%, more preferably 25 to 90 mass%, further preferably 30 to 90 mass%, furthermore preferably 30 to 80 mass%, furthermore preferably 30 to 60 mass%, of the thermally conductive particles. Regarding the resin composition of the present invention described later, when the same amount of thermally conductive particles are blended in the resin composition, it is sometimes advantageous to use the thermally conductive particle-filled fiber of the present intention containing the thermally conductive particles in amounts within the above range, from the viewpoints of production of the resin composition and an effect of improving a thermal conductivity. On that account, the thermally conductive particle-filled fiber of the present invention preferably contains the thermally conductive particles in amounts within the above range.

The thermally conductive particle-filled fiber of the present invention has an average fiber diameter of 50 to 10000 nm, preferably 100 to 5000 nm, more preferably 100 to 1000 nm.

Here, the average fiber diameter of the thermally conductive particle-filled fiber can be measured by photographing the resulting nanofibers by a scanning type electron microscope (SU1510 manufactured by Hitachi High-Technologies Corporation) to obtain an image, selecting 50 points on the image at random and determining an average value.

The thermally conductive particle-filled fiber of the present invention preferably has an average fiber length of not less than 100 μm, more preferably not less than 500 μm, further preferably not less than 1000 μm.

Here, the average fiber length of the thermally conductive particle-filled fiber can be measured by photographing the resulting nanofibers by a scanning type electron microscope to obtain an image, selecting 50 points on the image at random and determining an average value.

In the thermally conductive particle-filled fiber of the present invention, at least some of the thermally conductive particles are preferably present inside the fiber. That is to say, the thermally conductive particle-filled fiber of the present invention is a fine fiber in which the thermally conductive particles are dispersed. In order to obtain such a state, the thermally conductive particle-filled fiber of the present invention is preferably a fine fiber produced by an electrospinning method. The thermally conductive particle-filled fiber of the present invention can be produced by a process for producing a thermally conductive particle-filled fiber, the process having a step of spinning by an electrospinning method using a polymer solution containing a resin, thermally conductive particles and a solvent.

As the resin and the thermally conductive particles, the aforesaid ones are used. The resin is preferably a curable resin such as a thermosetting resin or a UV curable resin. The resin may be a resin having a curable group such as an epoxy group. When the resin is a curable resin, a curing agent can be contained in the polymer solution.

As the solvent in the polymer solution, a solvent that dissolves the resin is used. Examples of the solvents include organic solvents, specifically, ketones, such as methyl ethyl ketone, methyl isobutyl ketone, acetone and cyclohexanone, aromatic hydrocarbons, such as benzene, toluene, xylene and ethylbenzene, alcohols, such as methanol, ethanol, isopropyl alcohol, n-butanol and isobutyl alcohol, ethers, such as ethylene glycol monomethyl ether, ethylene glycol monoethyl ether, ethylene glycol monobutyl ether, diethylene glycol monomethyl ether and diethylene glycol monoethyl ether, esters, such as ethyl acetate, butyl acetate, ethyl lactate, γ-butyrolactone, propylene glycol monomethyl ether acetate and propylene glycol monoethyl ether acetate, and amides, such as dimethylformamide, N,N-dimethylacetoacetamide and N-methylpyrrolidone. In the present invention, the polymer solution is preferably prepared by mixing a mixture of the thermally conductive particles and the solvent with the resin. The electrospinning method using the polymer solution can be carried out in accordance with a known method.

The polymer solution may contain a dispersant. Examples of the dispersants include anionic dispersants including fatty acids that include polyvalent carboxylic acids, unsaturated fatty acids and the like, polymer-based ionic dispersants, and phosphate-based compounds. The dispersant is preferably used in a ratio of 1 to 25 mass% to the thermally conductive particles.

In the present invention, it is preferable that the resin is a polymer containing an epoxy group and a curing agent therefor is used. Specifically, a combination of a polymer having a glycidyl group and an amine compound that is a curing agent can be used as the resin. More specifically, a combination of a polymer selected from polyglycidyl methacrylate and poly-bisphenol A diglycidyl ether and a chain aliphatic polyamine such as diethylenetriamine, triethylenetetramine, tetraethylenepentamine, dipropylenediamine or diethylaminopropylamine can be mentioned. The amine compound that is a curing agent is preferably used in a ratio of 1 to 10 mass% to the polymer.

In the present invention, a polymer solution containing a polymer selected from polyglycidyl methacrylate and poly-bisphenol A diglycidyl ether, a chain aliphatic polyamine that is a curing agent for the polymer, thermally conductive particles such as magnesium oxide particles, and a solvent for the polymer is preferably used in the production of the thermally conductive particle-filled fiber.

<Resin composition and production process for the same>

The resin composition of the present invention contains the thermally conductive particle-filled fiber of the present invention and a resin (referred to as a matrix resin hereinafter).

The matrix resin in the resin composition may be the same as or different from the resin to constitute the thermally conductive particle-filled fiber. As the matrix resin in the resin composition, one or more selected from epoxy resins, acrylic resins, amide-imide resins, phenolic resins, silicone resins and the like can be mentioned. The resin may be one having a curable group such as an epoxy group.

In one aspect, the resin composition of the present invention preferably contains thermally conductive particles in the matrix resin (the particles being referred to as particles for a matrix resin hereinafter). That is to say, in one aspect, the resin composition of the present invention preferably contains thermally conductive particles dispersed in the matrix resin. As the particles for a matrix resin, one or more selected from metal oxide particles, metal nitride particles and carbon particles can be mentioned. As the particles for a matrix resin, one or more selected from aluminum oxide particles, magnesium oxide particles and crystalline silica particles are preferable. The particles for a matrix resin may be those of the same type as the thermally conductive particles in the thermally conductive particle-filled fiber (the particles being referred to as particles for a fiber hereinafter) or those of different type from them. The average particle diameter and the content of the particles for a matrix resin can be selected according to the purpose of addition.

The resin composition of the present invention preferably contains 1 to 90 parts by mass, more preferably 25 to 80 parts by mass, further preferably 30 to 75 parts by mass, of the thermally conductive particle-filled fiber of the present invention based on 100 parts by mass of the matrix resin.

In the case of a resin composition having been improved in thermal conductivity, such composition as below can be given as one example.

| | |
|---|---|
| Matrix resin | 5 to 99 parts by mass |
| Particles for matrix resin | 0 to 95 parts by mass |
| Thermally conductive particle-filled fiber of the present invention | 1 to 90 parts by mass |

In this resin composition, the resin is preferably a resin containing bisphenol A diglycidyl ether as a constituent monomer. The average particle diameter of the particles for a matrix resin is preferably 0.1 to 10 $\mu$m. When the particles for a matrix resin are used, it is preferable to use the thermally conductive particle-filled fiber in such a manner that the amount of the particles for a fiber in the thermally conductive particle-filled fiber becomes 1 to 75 mass% based on the particles for a matrix resin. That is to say, the mass ratio of particles for a fiber/particles for a matrix resin is preferably 0.01 to 0.75.

When the resin composition of the present invention contains the matrix resin and the particles for a matrix resin, the resin composition of the present invention preferably contains 1 to 90 parts by mass, more preferably 1 to 50 parts by mass, further preferably 1 to 25 parts by mass, of the thermally conductive particle-filled fiber of the present invention, based on 100 parts by mass of the total of the matrix resin and the particles for a matrix resin.

Particles of magnesium oxide or the like are known as an additive to enhance thermal conductivity of a resin, and in the present invention, the thermally conductive particles are contained in a fine fiber to prepare a thermally conductive particle-filled fiber, and the thermally conductive particle-filled fiber is blended in the resin composition, whereby thermal conductivity is remarkably enhanced as compared with the case where the same amount of the thermally conductive particles are directly blended in the resin composition.

Examples of uses of the resin composition of the present invention include heat dissipation materials and heat exchange materials for various electronic devices.

The resin composition of the present invention preferably has a transmittance of not less than 80%T, more preferably not less than 85%T, further preferably not less than 90%T. This transmittance can be obtained as a spectral transmittance measured in an incident light wavelength region $\lambda$ of 380 to 780 nm using a spectrophotometer. As the spectrophotometer, for example, a ratio beam spectrophotometer (manufactured by Hitachi High-Tech Science Corporation; U-5100) can be used. By using the thermally conductive particle-filled fiber of the present invention, a resin composition enhanced in thermal conductivity while maintaining transparency can be obtained.

The resin composition of the present invention can be produced by a process for producing a resin composition including step (I) of producing the thermally conductive particle-filled fiber of the present invention and step (II) of blending the thermally conductive particle-filled fiber obtained in step (I) with a resin, wherein step (I) has a step of spinning by an electrospinning method using a polymer solution containing the resin, the magnesium oxide particles and a solvent.

Step (I) is the same as the aforesaid process for producing the thermally conductive particle-filled fiber of the present invention.

In step (II), by mixing the thermally conductive particle-filled fiber with a constituent monomer of the matrix resin and polymerizing the constituent monomer, the thermally conductive particle-filled fiber can be blended in the matrix resin. Alternatively, in step (II), by kneading the thermally conductive particle-filled fiber obtained in step (I) with the matrix resin, the thermally conductive particle-filled fiber can be blended in the matrix resin.

In step (II), the particles for a matrix can be blended in the matrix resin.

In step (II), for example, by mixing the thermally conductive particle-filled fiber obtained in step (I), a constituent monomer of the matrix resin, and optionally, the particles for a matrix and polymerizing the constituent monomer, the thermally conductive particle-filled fiber and optionally the particles for a matrix can be blended in the matrix resin.

After step (II), step (III) to mold the mixture obtained in step (II) can be further provided. That is to say, a process for producing a resin molded article including step (I), step (II) and step (III) can be provided by the present invention. When a method of polymerizing the constituent monomer of the matrix resin is adopted in step (II), production of the resin composition and molding thereof can be carried out at the same time by filling a mold with the mixture for polymerization or applying the mixture to a support and then curing the mixture. For example, by mixing the thermally conductive particle-filled fiber obtained in step (I), the particles for a matrix and the constituent monomer of the matrix resin, filling a mold with the resulting mixture and polymerizing the constituent monomer in the mold, a resin composition containing the thermally conductive particle-filled fiber and the particles for a matrix can be molded. Furthermore, by curing a coating film of the mixture obtained in step (II), a thin film can be formed.

Moreover, a composite article in which the thermally conductive particle-filled fiber of the present invention or the resin composition of the present invention is combined with another member can also be obtained. An example thereof is an article in which the thermally conductive particle-filled fiber of the present invention is combined with a sheet, an adhesive film or the like.

Taking use application, etc. into consideration, the resin composition of the present invention can be molded into an appropriate shape and then used. By the present invention, a thin film composed of the resin composition of the present invention is provided. The thin film of the present invention preferably has a transmittance of not less than 80%T, more preferably not less than 85%T, further preferably not less than 90%T. This transmittance can be obtained as a spectral transmittance measured in an incident light wavelength region $\lambda$ of 380 to 780 nm using a spectrophotometer. As the spectrophotometer, for example, a ratio beam spectrophotometer (manufactured by Hitachi High-Tech Science Corporation; U-5100) can be used. The thin film of the present invention preferably has a transmittance within the above range under the conditions of a thickness of 160 $\mu$m and an incident light wavelength $\lambda$ of 400 nm. By using the thermally conductive particle-filled fiber of the present invention, a thin film enhanced in thermal conductivity while maintaining transparency can be obtained.

By the present invention, a process for producing a molded article including mixing the thermally conductive particle-filled fiber of the present invention and a constituent monomer for a matrix resin and curing the monomer in the mixture is provided.

By the present invention, a process for producing a cured thin film including mixing the thermally conductive particle-filled fiber of the present invention and a constituent monomer for a matrix resin, forming the mixture into a thin film and then curing the monomer in the thin film is further provided. A method for forming the mixture into a thin film is, for example, a method of applying the mixture to a support.

Examples

[Example 1 and Comparative Example 1]

<Production of thermally conductive particle-filled fiber>

(1) Preparation of polymer solution

Magnesium oxide particles (average particle diameter: 35 nm) and methyl ethyl ketone that was a solvent were mixed using a high-flex homogenizer, thereby preparing a dispersion. The concentration of the magnesium oxide particles in the dispersion was 30 mass%.

As a resin for a thermally conductive particle-filled fiber, flaky polyglycidyl methacrylate (PGMA) was used. As a curing agent for PGMA, triethylenetetramine (TETA) was used.

In the dispersion, PGMA was dissolved, and TETA was added, thereby preparing a polymer solution for use in an electrospinning method. The polymer solution had composition of 21 mass% of magnesium oxide particles, 52 mass% of methyl ethyl ketone, 25 mass% of PGMA, and 2 mass% of TETA.

(2) Production of thermally conductive particle-filled fiber by electrospinning method

Using the polymer solution prepared in the above (1), electrospinning was carried out by an electrospinning device (NEU Nanofiber Electrospinning Unit, KATO TECH CO., LTD.), and methyl ethyl ketone that was the solvent was vaporized, thereby producing thermally conductive particle-filled fibers having an average fiber diameter of 497 nm. The conditions of the electrospinning device were set to: syringe rate: 0.05 mm/min, nozzle inner diameter: 1.20 mm, rotary target (collector): stainless steel drum (diameter: 10 cm), rotary target rate: 3.00 m/min, voltage applied to nozzle: +15 kV, and distance from nozzle tip to rotary target: 10 cm.

Regarding these thermally conductive particle-filled fibers, at least some of the magnesium oxide particles were present inside the fibers. After the electrospinning method, the thermally conductive particle-filled fibers had composition of 40 mass% of magnesium oxide particles, and 60 mass% of a crosslinked resin of PGMA (corresponding to 55.7 mass% of PGMA and 4.3 mass% of TETA).

<Production of film for evaluation>

The resulting thermally conductive particle-filled fibers, bisphenol A diglycidyl ether (BPADGE) that was a monomer for a matrix resin, and aluminum oxide (average particle diameter: 3 $\mu$m) serving as particles for a matrix were mixed by an ultrasonic homogenizer, thereby preparing a monomer solution. To the monomer solution prepared, triethylenetetramine was added, and then the resulting mixture was poured into a Teflon (R) mold and heated at 120°C for 3 hours, thereby producing a film for evaluation.

In Table 1, composition in which the amount of aluminum oxide (Al$_2$O$_3$) was 50 mass% or 90 mass% in the total amount of BPADGE and aluminum oxide was adopted. As the thermally conductive particle-filled fibers, those having a magnesium oxide particle content of 40 mass% were adopted. The film was produced by controlling the addition amount of the thermally conductive particle-filled fibers in such a manner that the addition amount of magnesium oxide in the thermally conductive particle-filled fibers based on 100 parts by mass of the total of BPADGE and aluminum oxide was as shown in Table 1. In the films of the examples, the thermally conductive particle-filled fibers and the magnesium oxide particles were dispersed in the matrix resin.

As a film for comparison, a film was produced by preparing a monomer solution using, instead of the thermally conductive particle-filled fibers, the magnesium oxide particles blended in the thermally conductive particle-filled fibers, as they were, in the addition amount of Table 1.

In the table, a combination of BPADGE and aluminum oxide is written as a matrix resin for convenience.

<Evaluation of film>

Thermal diffusivity, specific heat and density of each of the resulting films for evaluation were measured, and a thermal conductivity (W/m·K) was calculated from the following equation.

$$\text{Thermal conductivity = (thermal diffusivity} \times$$

$$\text{specific heat} \times \text{density)}$$

The thermal diffusivity was measured using a thermophysical property measuring device (Bethel Co., Ltd., Hudson Laboratory; Thermowave Analyzer TA3). At five measurement points in total, namely the center of a film in a direction perpendicular to the film and other points 1 mm shifted from the center to the left front, right front, left back and right back sides, the thermal diffusivity was measured, and a perpendicular average was calculated.

The specific heat was measured using a differential scanning calorimeter (manufactured by Shimadzu Corporation; DSC-60).

The specific gravity was measured using an electronic gravimeter (manufactured by Alfa Mirage Co., Ltd.; EW-300SG).

The results are set forth in Table 1. In Table 1, a thermal diffusivity of a film produced without adding the thermally conductive particle-filled fibers is also set forth.

In Figure 1, regarding each of the examples and the comparative examples in Table 1, a relationship between a thermal conductivity of a film and an amount of magnesium oxide particles added is graphically shown. In the samples, a combination of BPADGE and aluminum oxide (two types of 50 mass% and 90 mass%) is taken as a matrix resin, and as shown in Table 1, the reference example is a film in which magnesium oxide (MgO) particles have not been added, the comparative examples are each a film in which MgO particles have been simply added, and the examples are each a film in which MgO particle-filled fibers have been used.

[Table 1]

| | MgO | | Matrix resin | | Category |
|---|---|---|---|---|---|
| | Addition method | Addition amount*1 | Al$_2$O$_3$ content (mass%) | | |
| | | | 50 | 90 | |
| Thermal conductivity (W/m.K) | not added | | 0.36 | 1.11 | Reference Example |
| | MgO 40 mass%-containing fiber | 2 parts by mass | 0.67 | 1.46 | Example 1-1 |
| | MgO particle | 2 parts by mass | 0.44 | 1.31 | Comparative Example 1-1 |
| | MgO 40 mass%-containing fiber | 4 parts by mass | 0.82 | 1.53 | Example 1-2 |
| | MgO particle | 4 parts by mass | 0.48 | 1.32 | Comparative Example 1-2 |
| *1 Addition amount: amount (parts(s) by mass) of magnesium oxide particles added based on 100 parts by mass of the matrix resin (100 parts by mass of total of *BPADGE and aluminum oxide) | | | | | |

From the results of Table 1 and Figure 1, it can be seen that when the same amount of magnesium oxide particles is blended in the matrix resin, the thermal conductivity is increased by blending the particles in the form of the thermally conductive particle-filled fibers of the present invention. The results of Table 1 and Figure 1 are only specific examples of the present invention, and if the content of MgO in the MgO-containing fibers is increased or if the amount of the MgO-containing fibers added is increased, the thermal conductivity is further increased. In addition, while the MgO particles were contained in the fibers in the present invention, it is also possible to contain some of them in the fibers and to add some of them to the matrix resin.

[Example 2]

<Production of transparent coating film for evaluation>

Thermally conductive particle-filled fibers (average fiber diameter: 497 nm) containing 45 mass% of magnesium oxide particles and 55 mass% of a crosslinked resin of PGMA were produced in the same manner as in the aforesaid production of thermally conductive particle-filled fibers, except that the composition of the polymer solution was changed. In these thermally conductive particle-filled fibers, at least some of the magnesium oxide particles were present inside the fibers.
The resulting thermally conductive particle-filled fibers and a polymer solution in which 60 mass% of polyglycidyl methacrylate (PGMA) that was a monomer for a matrix resin was dissolved in methyl ethyl ketone (MEK) were kneaded in a mortar to obtain a fiber-added polymer solution. The fiber-added polymer solution prepared was applied onto a cover glass by an applicator and heated at 100°C for one hour to obtain a transparent coating film for evaluation. In this case, the transparent coating film was produced by controlling the addition amount of the thermally conductive particle-filled fibers in such a manner that the contents of PGMA and the thermally conductive particle-filled fibers in the transparent coating film were as shown in Table 2. In the transparent coating films of the examples, the thermally conductive particle-filled fibers were dispersed in the matrix resin.

<Evaluation of transparent coating film>

A spectral transmittance of the resulting transparent coating film for evaluation was measured using a ratio beam spectrophotometer (manufactured by Hitachi High-Tech Science Corporation; U-5100, incident light wavelength $\lambda$: 400 nm). Further, a thermal conductivity of the resulting transparent coating film was calculated in the same manner as in Example 1. These results are set forth in Table 2. The reference example is a transparent coating film produced without adding the thermally conductive particle-filled fibers.

[Table 2]

| | | Transparent coating film | | | | Evaluation | |
| | | Composition | | | Film thickness ($\mu$m) | Transmittance (%T) | Thermal conductivity (W/m·K) |
| | | Matrix resin (PGMA) (mass%) | MgO 45 mass%-containing fiber (mass%) | Content in terms of MgO (mass%) | | | |
| Reference Example | | 100 | 0 | 0 | 120 | 95 | 0.14 |
| Example | 2-1 | 90 | 10 | 4.5 | 106 | 88 | 0.33 |
| | 2-2 | 80 | 20 | 9 | 159 | 80 | 0.46 |

From the results of Table 2, it can be seen that when the thermally conductive particle-filled fibers of the present invention are used, the thermal conductivity can be improved while maintaining a transmittance of the transparent coating film. It can be thought that when the film thicknesses of the transparent coating films of Examples 2-1 and 2-2 are further decreased, the transmittances are further increased.

**Claims**

1. A thermally conductive particle-filled fiber having an average fiber diameter of 50 to 10000 nm and comprising a resin and thermally conductive particles having an average particle diameter of 10 to 1000 nm.

2. The thermally conductive particle-filled fiber according to claim 1, wherein the resin is one or more resins selected from epoxy resins, acrylic resins, amide-imide resins, phenolic resins, silicone resins and the like.

3. The thermally conductive particle-filled fiber according to claim 1 or 2, comprising 20 to 90 mass% of the thermally conductive particles.

4. The thermally conductive particle-filled fiber according to any one of claims 1 to 3, having an average fiber length of 100 $\mu$m or more.

5. The thermally conductive particle-filled fiber according to any one of claims 1 to 4, wherein the thermally conductive particles are one or more selected from metal oxide particles, metal nitride particles and carbon particles.

6. The thermally conductive particle-filled fiber according to any one of claims 1 to 5, wherein the thermally conductive particles are one or more selected from magnesium oxide particles, aluminum oxide particles, boron nitride particles, aluminum nitride particles, silicon nitride particles, nanodiamonds, carbon nanotubes and graphene particles.

7. A resin composition comprising the thermally conductive particle-filled fiber according to any one of claims 1 to 6 and a resin (referred to as a matrix resin hereinafter).

8. The resin composition according to claim 7, wherein the matrix resin comprises thermally conductive particles.

9. The resin composition according to claim 7 or 8, wherein the thermally conductive particles in the matrix resin are one or more selected from metal oxide particles, metal nitride particles and carbon particles.

10. The resin composition according to any one of claims 7 to 9, wherein the thermally conductive particles in the matrix resin are one or more selected from aluminum oxide particles, magnesium oxide particles and crystalline silica particles.

11. The resin composition according to any one of claims 7 to 10, having a transmittance of not less than 80%T.

12. A process for producing the thermally conductive particle-filled fiber according to any one of claims 1 to 6, the process having a step of spinning by an electrospinning method using a polymer solution comprising the resin, the thermally conductive particles and a solvent.

13. A process for producing a resin composition, the process having step (I) of producing the thermally conductive particle-filled fiber according to any one of claims 1 to 6 and step (II) of blending the thermally conductive particle-filled fiber obtained in step (I) with a resin, wherein step (I) has a step of spinning by an electrospinning method using a polymer solution comprising the resin, the thermally conductive particles and a solvent.

14. The process for producing a resin composition according to claim 13, wherein in step (II), the thermally conductive particle-filled fiber is blended with the resin by mixing the thermally conductive particle-filled fiber with a constituent monomer of the resin and polymerizing the constituent monomer.

15. A thin film composed of the resin composition according to any one of claims 7 to 11.

16. The thin film according to claim 15, having a transmittance of not less than 80%T.

[Fig. 1]

## INTERNATIONAL SEARCH REPORT

International application No.

PCT/JP2018/018068

### A. CLASSIFICATION OF SUBJECT MATTER

Int. Cl. D01F6/00(2006.01)i, C08J5/04(2006.01)i, C08K3/01(2018.01)i, C08L101/00(2006.01)i, D01D5/04(2006.01)i, D01F6/44(2006.01)i

According to International Patent Classification (IPC) or to both national classification and IPC

### B. FIELDS SEARCHED

Minimum documentation searched (classification system followed by classification symbols)
Int. Cl. D01F6/00-9/04, B29B11/16, B29B15/08-15/14, C08J3/00-5/24, C08J99/00, C08K3/00-13/08, C08L1/00-101/14, D01D1/00-13/02

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-162921 A (SUMITOMO BAKELITE CO.) 08 September 2014, claims, paragraphs [0042], [0045], [0052]-[0055], [0085], [0089] (Family: none) | 1-16 |
| X | JP 2014-118429 A (SUMITOMO BAKELITE CO.) 30 June 2014, claims, paragraphs [0043], [0046], [0048]-[0051], [0069], [0081], [0085] (Family: none) | 1-16 |
| X<br>A | JP 2007-154007 A (SEIKO EPSON CORP.) 21 June 2007, claims, paragraphs [0003], [0019], [0022], [0027]-[0029], [0049], [0050], [0053] (Family: none) | 1, 2, 4-16<br>3 |

☒   Further documents are listed in the continuation of Box C.      ☐   See patent family annex.

| | |
|---|---|
| * Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 02.07.2018 | 17.07.2018 |

| Name and mailing address of the ISA/<br>　　Japan Patent Office<br>　　3-4-3, Kasumigaseki, Chiyoda-ku,<br>　　Tokyo 100-8915, Japan | Authorized officer |
| | Telephone No. |

Form PCT/ISA/210 (second sheet) (January 2015)

**INTERNATIONAL SEARCH REPORT**

International application No.

PCT/JP2018/018068

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2008-75010 A (MITSUBISHI CHEMICAL CORP.) 03 April 2008, claims, paragraphs [0018], [0022], [0023], [0035], [0048]-[0050], [0057], tables 1, 2 (Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004003070 A
- JP 2016011474 A
- JP 2006336121 A
- JP 2011529437 A
- JP 2015086270 A
- JP 2008075010 A
- JP 2010526941 A
- JP 2016079202 A